# EUROPEAN PATENT SPECIFICATION

(11) **EP 4 516 945 B1**
(45) Date of publication and mention of the grant of the patent: **21.10.2026**
(21) Application number: 23937761.7
(22) Date of filing: 29.06.2023
(51) Int. Cl.: C22B 3/10, C22B 23/00, C22B 21/00, C22B 59/00, C22B 1/08, C22B 3/22, C22B 3/44, C22B 7/00, C22B 7/04, C22B 3/00

(54) **COMPREHENSIVE UTILIZATION METHOD FOR VALUABLE ELEMENTS IN DISCHARGED SLAG OF LATERITE-NICKEL ORE SMELTING**
UMFASSENDES VERWENDUNGSVERFAHREN FÜR WERTVOLLE ELEMENTE IN ENTLADENER SCHLACKE AUS DER LATERIT-NICKELERZSCHMELZUNG
PROCÉDÉ D'UTILISATION COMPLÈTE POUR ÉLÉMENTS DE VALEUR DANS DES SCORIES ÉVACUÉES DE FUSION DE MINERAI DE NICKEL LATÉRITIQUE

(43) Date of publication of application: 05.03.2025
(73) Proprietor: PT QMB New Energy Materials, Jakarta Selatan, Provinsi DKI Jakarta, 12950 (ID); PT ESG New Energy Material, Jakarta Selatan, Provinsi DKI Jakarta 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: XU, Kaihua, Shenzhen, Guangdong 518101 (CN); BRODJONEGORO, Satryo Soemantri, Provinsi DKI Jakarta 12950 (ID); WU, Guangyuan, Shenzhen, Guangdong 518101 (CN); AJI, Tegar Mukti, Provinsi DKI Jakarta 12950 (ID); HASIBUAN, Andi Syaputra, Provinsi DKI Jakarta 12950 (ID); WANALDI, Rizky, Provinsi DKI Jakarta 12950 (ID); KRISTIYANTO, Evan Wahyu, Provinsi DKI Jakarta 12950 (ID); RAHMADI, Piyan, Provinsi DKI Jakarta 12950 (ID)
(74) Representative: Santarelli
(86) International application number: PCT/CN2023/103825
(87) International publication number: WO 2025/000339

(56) References cited:
- EP-B1- 2 004 550
- WO-A1-2023/056505
- CN-A- 101 403 035
- CN-A- 101 509 072
- CN-A- 103 468 972
- CN-A- 103 484 695
- CN-A- 112 226 630
- US-A1- 2015 225 808
- KAYA Å ERIF ET AL: "Concentration and Separation of Scandium from Ni Laterite Ore Processing Streams", METALS, M D P I AG, CH, vol. 7, no. 12, 1 December 2017 (2017-12-01), pages 557, XP009512516, ISSN: 2075-4701, DOI: 10.3390/MET7120557

## Description

### FIELD OF THE DISCLOSURE

The disclosure relates to the technical field of comprehensive utilization of laterite nickelore, and more particularly, to a comprehensive utilization method for valuable elements in hydrometallurgical slag of laterite nickel ore.

### BACKGROUND

Nickel has become a strategic metal resource as the pillar of the rapid development of new energy. As one of the main forms of nickel resources in nature, laterite nickel ore has been paid more and more attention. Among them, the laterite nickel ore hydrometallurgical process has been widely used in industrial production. In the hydrometallurgical process, a large amount of smelting waste is generated, among which the iron-aluminum slag contains metal Sc element with a grade between 0.05 and 0.5 wt.%, which is of a significant recycling and processing value.

Currently, most of the processes for extracting Sc from the Sc-containing slag are acid-base leaching or water leaching after calcination, and the enrichment of Sc is further achieved by means of extraction or precipitation. For example, the patent "CN103468979A" discloses a method for recovering scandium from the iron-aluminum slag of laterite nickel ore metallurgy by means of leaching and extraction. KAVA Å ERIF et al. (2017) Metals-Open Access Metallurgy Journal, vol. 7, page 557 published Concentration and Separation of Scandium from Ni Laterite Ore Processing Streams. EP 2 004 550 B1 discloses metal chlorides and metals obtained from metal oxide containing materials.

However, since the aluminum content of the iron-aluminum slag is 10-30 times of scandium, and since the chemical properties of Sc and Al are very close, it is difficult to achieve effective separation of Al and Sc by using existing methods such as extraction or oxalate or hydroxide precipitation. Most of Sc will continue to enter the final aluminum or iron product along the treatment process, not only affecting the purity of the aluminum or iron products but also reducing the effective recovery of Sc.

### SUMMARY

In view of this, the disclosure provides a comprehensive utilization method for valuable elements in hydrometallurgical slag of laterite nickel ore, and the obtained aluminum, iron, and scandium products have a high purity and a high recovery rate.

To achieve the above technical objectives, the disclosure adopts the following technical solutions:

The disclosure provides a comprehensive utilization method for valuable elements in hydrometallurgical slag of laterite nickel ore, comprising the following steps:
S1. placing an iron-aluminum slag produced by laterite nickel ore hydrometallurgy in a tube furnace, and introducing an HCl gas stream for a one-stage distillation at 185-290°C to obtain a one-stage distillation tail gas and a one-stage distillation residue; and condensing the one-stage distillation tail gas to obtain anhydrous AlCl₃;
S2. introducing an HCl gas stream to the one-stage distillation residue for a two-stage distillation at 320-500°C to obtain a two-stage distillation tail gas and a two-stage distillation residue; and condensing the two-stage distillation tail gas to obtain anhydrous FeCl₃;
S3. subjecting the two-stage distillation residue to a leaching treatment by using an extracting solution to obtain a leaching residue and a leaching solution; subjecting the leaching solution to a scandium precipitation treatment to obtain a scandium precipitate and a de-scandiumed liquid; and
S4. adjusting the pH value of the de-scandiumed liquid for a precipitation treatment to obtain a Mixed Hydroxide Precipitate (MHP).

Preferably, step S1 further comprises absorbing the HCl gas stream after the one-stage distillation by using lye, and step S2 further comprises absorbing the HCl gas stream after the two-stage distillation by using lye.

Preferably, the extracting solution in step S3 is water or acid; the solid-liquid ratio of the two-stage distillation residue to the leaching solution is 50-200 g/L; the leaching temperature is 20-25°C; and the leaching time is 0.5-2 h.

Preferably, the acid is one or more of an inorganic acid or an organic acid, and the concentration of the acid is 0.001-0.1 mol/L.

Preferably, in step S3, the scandium precipitation treatment comprises the following steps: adjusting the pH of the leaching solution to 4-6, and filtering to obtain the scandium precipitate and the de-scandiumed liquid, wherein the scandium precipitate is one or more of scandium hydroxide and scandium oxalate.

Preferably, step S3 further comprises calcining the scandium precipitate at 500-1000°C for 0.5-5 h to obtain scandium oxide.

Preferably, the leaching residue comprises a mixture of SiO₂ and CaSO₄, and the leaching residue is used for the manufacture of environmentally friendly permeable brick or ceramsite.

Preferably, in step S4, the pH is 9-10.

Preferably, the flow rate of the HCl gas streams for the one-stage distillation and the two-stage distillation is 10-300 ml/min, and the introduction time is 0.5-3 h.

Preferably, the flow rate of HCl gas streams used in the one-stage distillation and the two-stage distillation is kept constant, and the concentration of the lye in step S1 and step S2 is kept constant.

### Advantageous Effect of the Application:

In the disclosure, deep separation of AlCl₃, FeCl₃, and ScCl₃ is achieved by staged distillation or sublimation, and the finally obtained iron, aluminum, and scandium products have high purity and high recovery rates.

The two-stage distillation gas streams used in the disclosure are both HCl gas streams, which can eliminate the process of chlorination of iron, aluminum and scandium in the pretreatment process, shorten the process flow and improve the production efficiency.

In addition to obtaining iron, aluminum, and scandium products with high purity and high recovery rate, the disclosure also obtains a leaching residue containing SiO₂ and CaSO₄, which can be used for manufacturing environment-friendly permeable brick or ceramsite. At the same time, Mixed Hydroxide Precipitate (MHP) can be obtained with a high yield, which realizes the recovery of nickel and cobalt. The produced products and by-products can be used in industrial applications, with less waste residue and waste liquid, environmentally friendly, and high commercial value.

### BRIEF DESCRIPTION OF THE DRAWINGS

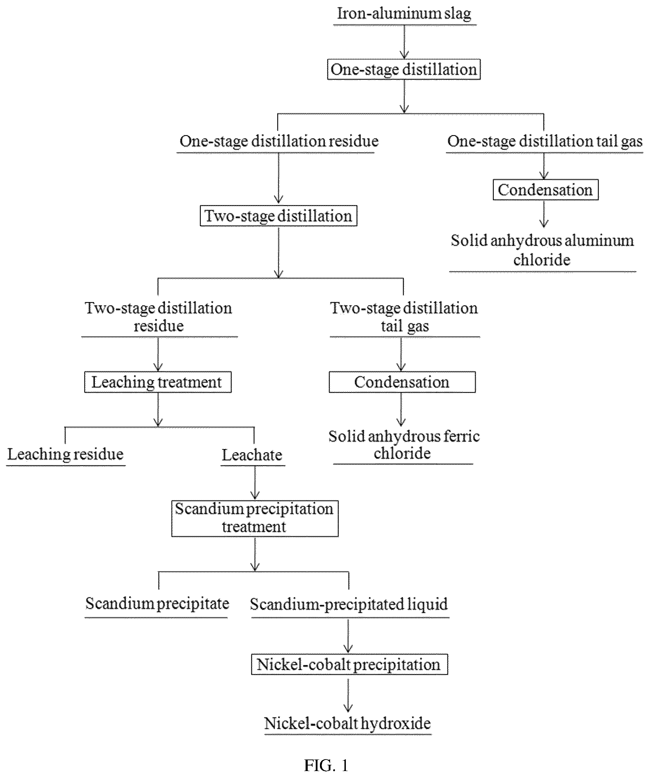

FIG. 1 is a process flow diagram of this scheme.

### DETAILED DESCRIPTION OF PREFERRED EMBODIMENTS

In order that the objects, aspects, and advantages of the disclosure will become more apparent, a more particular description of the disclosure will be rendered by reference to the embodiments. It should be understood that the particular embodiments described herein are illustrative only and are not restrictive.

The disclosure provides a comprehensive utilization method for valuable elements in hydrometallurgical slag of laterite nickel ore, comprising the following steps:
S1. placing an iron-aluminum slag produced by laterite nickel ore hydrometallurgy in a tube furnace, and introducing an HCl gas stream for a one-stage distillation at 185-290°C to obtain a one-stage distillation tail gas and a one-stage distillation residue; and condensing the one-stage distillation tail gas to obtain a solid anhydrous AlCl₃;
S2. introducing an HCl gas stream to the one-stage distillation residue for a two-stage distillation at 320-500°C to obtain a two-stage distillation tail gas and a two-stage distillation residue; and condensing the two-stage distillation tail gas to obtain a solid anhydrous FeCl₃;
S3. subjecting the two-stage distillation residue to a leaching treatment by using an extracting solution to obtain a leaching residue and a leaching solution; subjecting the leaching solution to a scandium precipitation treatment to obtain a scandium precipitate and a de-scandiumed liquid; and
S4. adjusting the pH value of the de-scandiumed liquid for a precipitation treatment to obtain MHP.

Based on the difference in the physical properties of iron, aluminum, and scandium metal chloride salts, i.e. the sublimation temperatures of AlCl₃, FeCl₃, and ScCl₃, the deep separation between the three can be achieved by the method of staged distillation or sublimation, so that the recovery rate of scandium is greatly improved and high-purity iron, aluminum and scandium related products can be obtained. Furthermore, there is a small amount of nickel and cobalt entrained in the iron-aluminum slag, and relevant nickel and cobalt MHP can also be simultaneously obtained through a recovery treatment. It should be noted that, since AlCl₃ (s), FeCl₃(s), and ScCl₃(s) are easily decomposed by direct heating distillation, for example, 2AlCl₃+3H₂O=Al₂O₃+6HCl would occur in the direct heating distillation of AlCl_{3 (s)} , which would lead to the aluminum element remaining in the iron-aluminum slag without achieving the purpose of separation. In order to inhibit the above-mentioned chemical reactions, this scheme further proposes introducing an HCl gas stream during the heating distillation to achieve a good effect, and it is unexpectedly found that the process of chlorination of iron, aluminum, and scandium in the pretreatment process can be omitted by using the HCl gas stream.

As known to a person skilled in the art, iron, aluminum, scandium, etc. in the iron-aluminum slag exist in the form of hydroxides. In the process of introducing the HCl gas stream in the present scheme, the following reactions gradually occur by controlling the distillation temperature:
(Fe, Al, Sc)(OH)₃+3HCl=(Fe, Al, Sc)Cl₃+3H₂O (1); the hydroxides of iron, aluminum, and scandium are respectively converted into the corresponding solid salts by introducing HCl;
AlCl₃(s)→AlCl₃(g) (2); AlCl₃ is sublimated from a solid state (s) to a gas state (g) by controlling T (185-290°C) under introducing HCl;
FeCl₃(s)→FeCl₃(g) (3); FeCl₃ is sublimated from a solid state (s) to a gas state (g) by controlling T (320-500°C) under introducing HCl;
However, since the sublimation process conditions of ScCl₃(s)→ScCl₃(g) require higher (only occurs when T>850°C) and consume higher energy, and since the subsequent treatment steps of the three-stage distillation tail gas and the three-stage distillation residue obtained after performing the three-stage distillation are complicated, after performing the two-stage distillation in the disclosure, the method of leaching-scandium precipitation-nickel-cobalt precipitation is used for post-treatment to obtain a high-value by-product, saving energy.

Step S1 further comprises absorbing the HCl gas stream after the one-stage distillation by using lye, and step S2 further comprises absorbing the HCl gas stream after the two-stage distillation by using lye; that is to say after the distillation tail gas is firstly connected to the condensation collection device, the remaining gas after condensation is introduced into the lye for absorption. In order to fully condense the AlCl₃ and FeCl₃, the condensation collection device may be repeatedly provided in multiple numbers. The lye used includes but is not limited to one or more of ammonia and sodium hydroxide, and the concentration of the lye is 1-3 mol/L.

In step S3, the extracting solution is water or acid, the solid-liquid ratio of the two-stage distillation residue to the leaching solution is 50-200 g/L; the leaching temperature is 20-25°C; and the leaching time is 0.5-2 h. Through leaching treatment, the leaching residue containing SiO₂ and CaSO₄ and a leaching solution containing scandium salt and nickel-cobalt salt can be obtained. SiO₂ and CaSO₄ with the maximum leaching effect can be obtained under this solid-liquid ratio definition. The leaching residue comprises a mixture of SiO₂ and CaSO₄, the leaching residue being used for the manufacture of environmentally friendly permeable brick or ceramsite.

The acid is one or more of an inorganic acid or an organic acid, and the concentration of the acid is 0.001-0.1mol/L; too high an acid concentration will dissolve calcium sulfate and too low an acid concentration will not leach.

In step S3, the scandium precipitation treatment comprises the following steps: adjusting the pH of the leaching solution to 4-6 and filtering to obtain the scandium precipitate and the de-scandiumed liquid, wherein the scandium precipitate is one or more of scandium hydroxide and scandium oxalate.

Step S3 further comprises calcining the scandium precipitate at 500-1000°C for 0.5-5 h to obtain scandium oxide.

By the scandium precipitation-calcination treatment in step S3, scandium oxide with a purity of > 99% can be obtained. The de-scandiumed liquid can then be used to recover MHP.

In step S4, the pH is 9-10, at which pH range, nickel, and cobalt can precipitate and form Mixed Hydroxide Precipitate (MHP) and a small amount of nickel cobalt carbonate.

The flow rate of the HCl gas stream of the one-stage distillation and the two-stage distillation is 10-300 ml/min, and the introduction time is 0.5-3 h; under this flow rate and time definition, AlCl₃ and FeCl₃ are fully distilled and sublimated.

The flow rate of the HCl gas stream used in the one-stage distillation and the two-stage distillation is kept constant, and the concentration of the lye in step S1 and step S2 is kept constant, beneficial to maintaining the stability of process conditions, reducing the number of adjustments, and saving resources.

The following provides further explanation of this scheme through specific examples.

### Example 1

A comprehensive utilization method for valuable elements in hydrometallurgical slag of laterite nickel ore included the following steps:
S1. 1 kg of iron-aluminum slag produced by laterite nickel ore hydrometallurgy was taken and placed in a tube furnace. An HCl stream flow was introduced at a flow rate of 30 ml/min. The distillation was performed at a temperature of 200°C for 2 h, so as to obtain a one-stage distillation tail gas and a one-stage distillation residue. The one-stage distillation tail gas was subjected to condensing using a circulating water device to collect solid anhydrous aluminum chloride with a purity of 99.52% and a yield of 92.14%. The condensed distillation tail gas (HCl gas stream) was introduced into lye for absorption, wherein the lye was a NaOH solution with a concentration of 1 mol/L. The yield of anhydrous aluminum chloride was obtained by dividing the aluminum element content of the obtained anhydrous aluminum chloride by the aluminum element content in the original iron-aluminum slag phase, and the aluminum element content in the original iron-aluminum slag phase was determined by ICP.
S2. The temperature of the one-stage distillation residue was kept for 2 h and then continued to be increased to400°C and kept at this temperature for 2h. The flow rate of the HCl gas was controlled to be constant. After distillation and sublimation, a two-stage distillation tail gas and a two-stage distillation residue were obtained. The two-stage distillation tail gas was condensed through a circulating water condensation device to collect solid anhydrous ferric chloride with a purity of 99.33% and a ferric chloride yield of 90.45%. The condensed distillation tail gas (the HCl gas stream) was introduced into lye for absorption, wherein the type and the concentration of the lye were constant. The yield of anhydrous ferric chloride was obtained by dividing the iron element content of the obtained anhydrous ferric chloride by the iron element content in the original iron-aluminum slag phase, and the iron element content in the original iron-aluminum slag phase was determined by ICP.
S3. The two-stage distillation residue was leached with 0.01 mol/L sulfuric acid. The solid-liquid ratio was controlled to be 100 g/L, the time to be 30 min, and the temperature to be 20-25°C to obtain a leaching residue and a leaching solution. The leaching residue was a mixture of SiO₂ and CaSO₄, which can be used for manufacturing environmentally friendly permeable brick or ceramsite. The leaching solution was an Sc enrichment solution and an enrichment residue. The pH of the leaching solution was adjusted to 5 using a liquid alkali. A scandium precipitate and a de-scandiumed liquid were obtained by filtering. The scandium precipitate was Sc(OH)₃. The scandium precipitate was calcined at a temperature of 600°C for 1 h to obtain Sc₂O₃with a purity of 99.12%; and the yield of Sc was 97.34%. The pH of the de-scandiumed liquid was further adjusted to 10 by using a liquid alkali, and a Mixed Hydroxide Precipitate (MHP) was obtained by filtering the precipitate, with a nickel-cobalt yield of 95.25%. The yields of Sc, nickel, and cobalt were calculated in the same manner as the yield of aluminum in step S1.

### Example 2

A comprehensive utilization method for valuable elements in hydrometallurgical slag of laterite nickel ore. The other contents were the same as those in example 1, except that the one-stage distillation temperature was 185°C; a liquid anhydrous aluminum chloride was collected with a purity of 92.15%; the yield of anhydrous aluminum chloride was 85.28%; the two-stage distillation temperature was 500°C; a liquid anhydrous ferric chloride was collected with a purity of 98.34%; the yield of ferric chloride was 91.52%; the pH of the leaching solution was adjusted to 4; Sc₂O₃ was obtained with a purity of 96.66%; the yield of Sc was 96.21%; the pH of the de-scandiumed liquid was adjusted to 9; and the yield of nickel-cobalt was 93.37%.

### Example 3

A comprehensive utilization method for valuable elements in hydrometallurgical slag of laterite nickel ore. The other contents were the same as those in example 1, except that the one-stage distillation temperature was 290°C; a liquid anhydrous aluminum chloride was collected with a purity of 99.31%; the yield of anhydrous aluminum chloride was 95.29%; the two-stage distillation temperature was 320°C; a liquid anhydrous ferric chloride was collected with a purity of 99.36%; the yield of ferric chloride was 82.58%; the pH of the leaching solution was adjusted to 6; Sc₂O₃ was obtained with a purity of 95.45%; the yield of Sc was 95.39%; and the yield of nickel-cobalt was 97.44%.

### COMPARATIVE EXAMPLE 1

A comprehensive utilization method for valuable elements in hydrometallurgical slag of laterite nickel ore. The other contents were the same as those in example 1, except that the one-stage distillation temperature and the two-stage distillation temperature were both 200°C; liquid anhydrous aluminum chloride was collected with a purity of 99.28%; the yield of anhydrous aluminum chloride was 92.63%; almost no ferric chloride was collected; the purity of Sc₂O₃ was 90.52%; the yield of Sc was 80.94%; and the yield of nickel-cobalt was 80.39%.

### COMPARATIVE EXAMPLE 2

A comprehensive utilization method for valuable elements in hydrometallurgical slag of laterite nickel ore. The other contents were the same as in Example 1, except that the temperature for the one-stage distillation and the temperature for the two-stage distillation were both 400°C; liquid anhydrous aluminum chloride was collected with a purity of 75.85%; the yield of anhydrous aluminum chloride was 96.64%; anhydrous ferric chloride was collected with a purity of 95.59%; the yield of anhydrous ferric chloride was 73.74%; Sc₂O₃ was obtained with a purity of 92.29%; the yield of Sc was 83.68%; and the yield of nickel-cobalt was 84.55%.

It can be seen that in the disclosure, deep separation of AlCl₃, FeCl₃, and ScCl₃ is achieved by staged distillation or sublimation, and the finally obtained iron, aluminum, and scandium products have high purity and high recovery rates.

## Claims

1. A comprehensive utilization method for valuable elements in hydrometallurgical slag of laterite nickel ore, comprising the following steps:
S1. placing an iron-aluminum slag produced by laterite nickel ore hydrometallurgy in a tube furnace, and introducing an HCl gas stream for a one-stage distillation at 185-290°C to obtain a one-stage distillation tail gas and a one-stage distillation residue; and condensing the one-stage distillation tail gas to obtain anhydrous AlCl₃;
S2. introducing an HCl gas stream to the one-stage distillation residue for a two-stage distillation at 320-500°C to obtain a two-stage distillation tail gas and a two-stage distillation residue; and condensing the two-stage distillation tail gas to obtain anhydrous FeCl₃;
S3. subjecting the two-stage distillation residue to a leaching treatment by using an extracting solution to obtain a leaching residue and a leaching solution; subjecting the leaching solution to a scandium precipitation treatment to obtain a scandium precipitate and a de-scandiumed liquid; and
S4. adjusting the pH value of the de-scandiumed liquid for a precipitation treatment to obtain a Mixed Hydroxide Precipitate (MHP).

2. The comprehensive utilization method for valuable elements in hydrometallurgical slag of laterite nickel ore according to claim 1, wherein step S1 further comprises absorbing the HCl gas stream after the one-stage distillation by using lye, and step S2 further comprises absorbing the HCl gas stream after the two-stage distillation by using lye.

3. The comprehensive utilization method for valuable elements in hydrometallurgical slag of laterite nickel ore according to claim 1, wherein the extracting solution in step S3 is water or acid; the solid-liquid ratio of the two-stage distillation residue to the leaching solution is 50-200 g/L; the leaching temperature is 20-25°C; and the leaching time is 0.5-2 h.

4. The comprehensive utilization method for valuable elements in hydrometallurgical slag of laterite nickel ore according to claim 3, wherein the acid is one or more of inorganic acid or organic acid, and the concentration of the acid is 0.001-0.1 mol/L.

5. The comprehensive utilization method for valuable elements in hydrometallurgical slag of laterite nickel ore according to claim 1, wherein in step S3, the scandium precipitation treatment comprises the following steps: adjusting the pH of the leaching solution to 4-6 and filtering to obtain the scandium precipitate and the de-scandiumed liquid, wherein the scandium precipitate is one or more of scandium hydroxide and scandium oxalate.

6. The comprehensive utilization method for valuable elements in hydrometallurgical slag of laterite nickel ore according to claim 1, wherein step S3 further comprises calcining the scandium precipitate at 500-1000°C for 0.5-5 h to obtain scandium oxide.

7. The comprehensive utilization method for valuable elements in hydrometallurgical slag of laterite nickel ore according to claim 1, wherein the leaching residue comprises a mixture of SiO₂ and CaSO₄.

8. The comprehensive utilization method for valuable elements in hydrometallurgical slag of laterite nickel ore according to claim 1, wherein in step S4, the pH is 9-10.

9. The comprehensive utilization method for valuable elements in hydrometallurgical slag of laterite nickel ore according to claim 1, wherein the flow rate of the HCl gas streams for the one-stage distillation and the two-stage distillation is 10-300 ml/min, and the introduction time is 0.5-3 h.

10. The comprehensive utilization method for valuable elements in hydrometallurgical slag of laterite nickel ore according to claim 2, wherein the flow rate of HCl gas streams used in the one-stage distillation and the two-stage distillation is kept constant, and the concentration of the lye in step S1 and step S2 is kept constant.

## Patentansprüche

1. . Umfassendes Verwertungsverfahren für wertvolle Elemente aus hydrometallurgischer Schlacke aus Laterit-Nickelerz, das die folgenden Schritte umfasst:
S1. Einbringen einer Eisen-Aluminium-Schlacke, die durch Laterit-Nickelerz-Hydrometallurgie hergestellt wird, in einen Rohrofen und Einleiten eines HCl-Gasstroms für eine einstufige Destillation bei 185-290 °C, um ein Endgas der einstufigen Destillation und einen Rückstand der einstufigen Destillation zu erhalten; und Kondensieren des Endgases der einstufigen Destillation, um wasserfreies AlCl₃ zu erhalten;
S2. Einleiten eines HCl-Gasstroms in den Rückstand der einstufigen Destillation für eine zweistufige Destillation bei 320-500 °C, um ein Endgas der zweistufigen Destillation und einen Rückstand der zweistufigen Destillation zu erhalten; und Kondensieren des Endgases der zweistufigen Destillation, um wasserfreies FeCl₃ zu erhalten;
S3. Unterziehen des Rückstands der zweistufigen Destillation einer Auslaugungsbehandlung unter Verwendung einer Extraktionslösung, um einen Auslaugungsrückstand und eine Auslaugungslösung zu erhalten; Unterziehen der Auslaugungslösung einer Scandium-Fällungsbehandlung, um ein Scandium-Präzipitat und eine Scandium-freie Flüssigkeit zu erhalten; und
S4. Anpassen des pH-Werts der Scandium-freien Flüssigkeit für eine Fällungsbehandlung, um ein gemischtes Hydroxid-Präzipitat (MHP) zu erhalten.

2. . Umfassendes Verwertungsverfahren für wertvolle Elemente aus hydrometallurgischer Schlacke von Laterit-Nickelerz nach Anspruch 1, wobei Schritt S1 ferner das Absorbieren des HCl-Gasstroms nach der einstufigen Destillation unter Verwendung von Lauge umfasst, und Schritt S2 ferner das Absorbieren des HCl-Gasstroms nach der zweistufigen Destillation unter Verwendung von Lauge umfasst.

3. . Umfassendes Verwertungsverfahren für wertvolle Elemente aus hydrometallurgischer Schlacke von Laterit-Nickelerz nach Anspruch 1, wobei die Extraktionslösung in Schritt S3 Wasser oder Säure ist; das Fest-Flüssig-Verhältnis des Rückstands der zweistufigen Destillation zur Auslaugungslösung 50-200 g/l beträgt; die Auslaugungstemperatur 20-25 °C beträgt; und die Auslaugungszeit 0,5-2 h beträgt.

4. . Umfassendes Verwertungsverfahren für wertvolle Elemente aus hydrometallurgischer Schlacke aus Laterit-Nickelerz nach Anspruch 3, wobei die Säure eine oder mehrere von einer anorganischen Säure oder einer organischen Säure ist und die Konzentration der Säure 0,001-0,1 mol/l beträgt.

5. . Umfassendes Verwertungsverfahren für wertvolle Elemente aus hydrometallurgischer Schlacke von Laterit-Nickelerz nach Anspruch 1, wobei in Schritt S3 die Scandium-Fällungsbehandlung die folgenden Schritte umfasst: Anpassen des pH-Werts der Auslaugungslösung auf 4-6 und Filtrieren, um das Scandium-Präzipitat und die Scandium-freie Flüssigkeit zu erhalten, wobei das Scandium-Präzipitat eines oder mehrere von Scandiumhydroxid und Scandiumoxalat ist.

6. . Umfassendes Verwertungsverfahren für wertvolle Elemente aus hydrometallurgischer Schlacke von Laterit-Nickelerz nach Anspruch 1, wobei Schritt S3 ferner das Kalzinieren des Scandium-Präzipitats bei 500-1000 °C für 0,5-5 h umfasst, um Scandiumoxid zu erhalten.

7. . Umfassendes Verwertungsverfahren für wertvolle Elemente aus hydrometallurgischer Schlacke aus Laterit-Nickelerz nach Anspruch 1, wobei der Auslaugungsrückstand ein Gemisch aus SiO₂ und CaSO₄ umfasst.

8. . Umfassendes Verwertungsverfahren für wertvolle Elemente aus hydrometallurgischer Schlacke von Laterit-Nickelerz nach Anspruch 1, wobei in Schritt S4 der pH-Wert 9-10 beträgt.

9. . Umfassendes Verwertungsverfahren für wertvolle Elemente aus hydrometallurgischer Schlacke von Laterit-Nickelerz nach Anspruch 1, wobei die Durchflussrate der HCl-Gasströme für die einstufige Destillation und die zweistufige Destillation 10-300 ml/min beträgt und die Einleitungszeit 0,5-3 h beträgt.

10. . Umfassendes Verwertungsverfahren für wertvolle Elemente aus hydrometallurgischer Schlacke von Laterit-Nickelerz nach Anspruch 2, wobei die Durchflussrate von HCl-Gasströmen, die in der einstufigen Destillation und der zweistufigen Destillation verwendet werden, konstant gehalten wird und die Konzentration der Lauge in Schritt S1 und Schritt S2 konstant gehalten wird.

## Revendications

1. Procédé d'utilisation complète pour éléments de valeur dans des scories hydrométallurgiques de minerai de nickel latéritique, comportant les étapes suivantes :
S1. placement d'une scorie de fer-aluminium produite par hydrométallurgie de minerai de nickel latéritique dans un four tubulaire, et introduction d'un flux de gaz HCl pour une distillation à un étage à 185-290 °C pour obtenir un gaz de queue de distillation à un étage et un résidu de distillation à un étage ; et condensation du gaz de queue de distillation à un étage pour obtenir de l'AlCl₃ anhydre ;
S2. introduction d'un flux de gaz HCl dans le résidu de distillation à un étage pour une distillation à deux étages à 320-500 °C pour obtenir un gaz de queue de distillation à deux étages et un résidu de distillation à deux étages ; et condensation du gaz de queue de distillation à deux étages pour obtenir du FeCl₃ anhydre ;
S3. soumission du résidu de distillation à deux étages à un traitement de lixiviation en utilisant une solution d'extraction pour obtenir un résidu de lixiviation et une solution de lixiviation ; soumission de la solution de lixiviation à un traitement de précipitation de scandium pour obtenir un précipité de scandium et un liquide déscandié ; et
S4. ajustement de la valeur de pH du liquide déscandié pour un traitement de précipitation afin d'obtenir un précipité d'hydroxyde mixte (MHP).

2. Procédé d'utilisation complète pour éléments de valeur dans des scories hydrométallurgiques de minerai de nickel latéritique selon la revendication 1, dans lequel l'étape S1 comporte en outre l'absorption du flux de gaz HCl après la distillation à un étage en utilisant une solution alcaline, et l'étape S2 comporte en outre l'absorption du flux de gaz HCl après la distillation à deux étages en utilisant une solution alcaline.

3. Procédé d'utilisation complète pour éléments de valeur dans des scories hydrométallurgiques de minerai de nickel latéritique selon la revendication 1, dans lequel la solution d'extraction à l'étape S3 est de l'eau ou de l'acide ; le rapport solide-liquide du résidu de distillation à deux étages sur la solution de lixiviation est de 50 à 200 g/l ; la température de lixiviation est de 20 à 25 °C ; et le temps de lixiviation est de 0,5 à 2 h.

4. Procédé d'utilisation complète pour éléments de valeur dans des scories hydrométallurgiques de minerai de nickel latéritique selon la revendication 3, dans lequel l'acide est un ou plusieurs parmi un acide inorganique ou un acide organique, et la concentration de l'acide est de 0,00,1 à 0,1 mol/L.

5. Procédé d'utilisation complète pour éléments de valeur dans des scories hydrométallurgiques de minerai de nickel latéritique selon la revendication 1, dans lequel, à l'étape S3, le traitement de précipitation de scandium comporte les étapes suivantes : ajustement du pH de la solution de lixiviation à 4-6 et filtrage pour obtenir le précipité de scandium et le liquide déscandié, dans lequel le précipité de scandium est un ou plusieurs parmi l'hydroxyde de scandium et l'oxalate de scandium.

6. Procédé d'utilisation complète d'éléments de valeur dans des scories hydrométallurgiques de minerai de nickel de latérite selon la revendication 1, dans lequel l'étape S3 comporte en outre la calcination du précipité de scandium à 500-1000 °C pendant 0,5-5 h pour obtenir de l'oxyde de scandium.

7. Procédé d'utilisation complète pour éléments de valeur dans des scories hydrométallurgiques de minerai de nickel latéritique selon la revendication 1, dans lequel le résidu de lixiviation comporte un mélange de SiO₂ et de CaSO₄.

8. Procédé d'utilisation complète pour éléments de valeur dans des scories hydrométallurgiques de minerai de nickel latéritique selon la revendication 1, dans lequel à l'étape S4, le pH est de 9-10.

9. Procédé d'utilisation complète pour éléments de valeur dans des scories hydrométallurgiques de minerai de nickel latéritique selon la revendication 1, dans lequel le débit des flux de gaz HCl pour la distillation à un étage et la distillation à deux étages est de 10 à 300 ml/min, et le temps d'introduction est de 0,5 à 3 h.

10. Procédé d'utilisation complète pour éléments de valeur dans des scories hydrométallurgiques de minerai de nickel latéritique selon la revendication 2, dans lequel le débit de flux de gaz HCl utilisé dans la distillation à un étage et la distillation à deux étages est maintenu constant, et la concentration de la solution alcaline à l'étape S1 et à l'étape S2 est maintenue constante.
